# EUROPEAN PATENT SPECIFICATION

(11) **EP 3 362 712 B1**
(45) Date of publication and mention of the grant of the patent: **15.01.2020**
(21) Application number: 15790824.5
(22) Date of filing: 13.10.2015
(51) Int. Cl.: F16K 3/314

(54) **A METHOD FOR MANUFACTURING FLUID CONTROL MEANS**
VERFAHREN ZUR HERSTELLUNG VON FLUIDSTEUERUNGSMITTELN
PROCÉDÉ DE FABRICATION DE MOYENS DE RÉGULATION DE FLUIDE

(43) Date of publication of application: 22.08.2018
(73) Proprietor: AVK Holding A/S, 8464 Galten (DK)
(72) Inventor: FREUDENDAHL, Erling Arnum, DK-7700 Thisted (DK)
(74) Representative: Patentgruppen A/S
(86) International application number: PCT/DK2015/050312
(87) International publication number: WO 2017/063651

(56) References cited:
- WO-A1-2013/144276
- FR-A- 1 318 031
- US-A- 3 662 778
- US-A- 4 138 091

## Description

### Field of the invention

The invention relates a method for manufacturing fluid control means for controlling a fluid flow through a valve. The invention also relates to a valve.

### Background of the invention

A shaft operated valve - such as a gate valve - typically comprises a shaft provided with an externally threaded part meshing with an internally threaded part of fluid control means of the valve - wherein the fluid control means typically comprises some sort of wedge. Thus, when the shaft is rotated from outside the valve, the wedge will be displaced up or down inside the valve to open or close the fluid passage through the valve.

The shaft therefore extends both inside and outside the valve housing and to insure sufficiently long life of the valve and strength of the shaft, the shaft is typically made from stainless steel. And to ensure easy operation of the valve the material in which the internally threaded part of the wedge is made, is typically some sort of bearing-suited material such as brass, bronze or other. However, it would be very expensive to form the entire wedge in e.g. brass or bronze and e.g. from WO 2013/144276 A1 it is therefore known to form a nut in brass and the rest of the wedge in cast iron and then connect the two by means of a rubber coating. But the elastic quality of this connection method enables that the rubber coating over time - and particularly during operation of the valve - may loosen from the wedge surface and/or the nut surface and entail corrosion, detachment or other, which in turn may make it more difficult to operate the valve or even lead to catastrophic defects. And from US 3,662,778 it is known to integrally cast a nut into the wedge.

An object of the invention is therefore to provide for an advantageous and cost-effective technique for assembling fluid control means of a valve.

### The invention

The invention provides for a method for manufacturing fluid control means for controlling a fluid flow through a valve. The method comprises the steps of claim 1.

Forming the nut means and the wedge means from materials with different hardness entails that when the nut means and/or the wedge are expanded and/or contracted the two parts will engage more, since the harder part will be forced into the softer part making the two parts mesh and form a strong connection.

And connecting the two parts by mechanically forcing one against the other - either by deforming, expanding, squeezing, shrink-fitting or other - is advantageous in that this is an inexpensive and efficient way of connecting mechanical parts made from different material.

The term "fluid control means" is in this context to be understood as any kind of gate, hatch, wedge or any other kind of blocking device suitable for controlling the flow of fluid through a valve.

It should also be noted that in this context the term "nut means" should be understood as any kind of nut or similar device comprising an internally threaded hole. However, it should be noted that nut means according to the present invention not necessary have to comprise thread at all stages of the method. Actually, in a preferred embodiment the thread is not cut in the nut means until after the nut means and the wedge means have been connected.

Furthermore, in this context the term "wedge means" should be understood as any kind of plate, disc, wedge or another kind of barrier device suitable for being displaced inside a valve to selectively block the passage through the valve.

According to the invention, the nut means and wedge means are connected by expanding the nut means by means of mandrel means.

Since the nut means has to mesh with the shaft of the valve, the nut means is typically formed by a relatively soft material to avoid seizing and since a soft material typically also has a higher module of elasticity it is advantageous to connect the nut means and the wedge means by expanding the nut means. And using mandrel means ensures that the expansion process can be quick, efficient and precise.

The term "mandrel means" is in this context to be understood as any kind of drift, pin, rod or any other kind of mandrel suitable for being forced through a part and expanding it.

In an aspect of the invention, the mandrel means are forced through the inner through hole.

Hereby is achieved an advantageous embodiment of the invention.

In an aspect of the invention, a cross section of the mandrel means is bigger than a cross section of the inner through hole.

Forming the mandrel means with a cross section that it bigger than the cross section of the through hole is advantageous in that the mandrel means hereby will expand the nut means when being forced through the inner through hole.

In an aspect of the invention, an outer mandrel diameter of the mandrel means is greater than an inner hole diameter of the inner through hole.

Forming the mandrel means and the inner through hole with a circular cross section - i.e. with a diameter - is advantageous in that circular holes are inexpensive and simple to make and because the circular mandrel and hole ensure a symmetric and even distribution of forces during expansion.

In an aspect of the invention, the method further comprises the step of cutting internal thread in the inner through hole after connecting the nut means and wedge means.

In principle the tread could be cut in advance or the mandrel could cut the thread during the expansion process but it is advantageous to not cut the thread until after the nut means and the wedge means have been connected to ensure a more uniform connection process and a more precise thread.

In an aspect of the invention, the nut means and the wedge means are connecting by forcing at least one outer sidewall of the nut means against at least one inner sidewall of the wedge means or vice versa.

E.g. forcing the outer sidewalls of the nut means outwards against the inner sidewalls of the wedge means is advantageous in that the connection hereby is formed over a large area ensuring a strong hold.

In an aspect of the invention, the method further comprises the step of arranging one or more protrusions on an inner sidewall of the nut cavity before the nut means and the wedge means are connected.

Forming protrusions on an inner sidewall of the nut cavity is advantageous in that the protrusions will be forced into the nut means then the nut means and the wedge means are connected hereby forming a strong connection between the two parts.

The term "protrusion" is in this context to be understood as any kind of ridge, bulge, projection or any other kind of protruding surface irregularities suitable for being arranged on one surface and being forced into an opposing surface.

In an aspect of the invention, at least one of the one or more protrusions are formed as a transversal protrusion arranged to extend transversely on the inner sidewall in relation to a longitudinal extend of the nut cavity.

Forming transversal protrusions is advantageous in that these protrusions will ensure a connection which is particularly strong against axial loads.

In an aspect of the invention, at least one of the one or more protrusions are formed as a longitudinal protrusion arranged to extend longitudinally on the inner sidewalls in relation to a longitudinal extend of the nut cavity.

Forming longitudinal protrusions is advantageous in that these protrusions will ensure a connection which is particularly strong against radial loads - i.e. longitudinal protrusions will prevent the nut means and the wedge means from mutual rotation.

In an aspect of the invention, the method further comprises the step of arranging one or more protrusions and/or tracks on an outer sidewall of the nut means before the nut means and the wedge means are connected.

Forming protrusions and/or tracks on the outer sidewall of the nut means is advantageous in that it these protrusions and/or tracks will engage the inner sidewall of the nut cavity - e.g. the protrusions of the inner sidewall of the nut cavity - to ensure a particularly strong connection. I.e. in one embodiment protrusions on the inner sidewall of the nut cavity are arranged to engage corresponding tracks on the outer sidewall of the nut means to create a particularly strong hold.

In an aspect of the invention, at least one of the one or more protrusions are formed as a transversal protrusion arranged to extend transversely on the outer sidewall in relation to a longitudinal extend of the nut means.

Forming transversal protrusions and/or tracks is advantageous in that these protrusions and/or tracks will ensure a connection which is particularly strong against axial loads.

In an aspect of the invention, at least one of the one or more protrusions are formed as a longitudinal protrusion arranged to extend longitudinally on the outer sidewalls in relation to a longitudinal extend of the nut means.

Forming longitudinal protrusions and/or tracks is advantageous in that these protrusions and/or tracks will ensure a connection which is particularly strong against radial loads - i.e. longitudinal protrusions and/or tracks will prevent the nut means and the wedge means from mutual rotation.

In an aspect of the invention, the inner through hole is cylindrical.

Hereby is achieved an advantageous embodiment of the invention.

In an aspect of the invention, the nut means has a substantially constant outer diameter making it cylindrical.

Forming the nut means with a substantially constant circular cross section is advantageous in that a rotationally symmetrical design ensures an even load distribution and reduces material use.

In an aspect of the invention, the second material is significantly harder than the first material.

If the wedge means are e.g. formed in cast iron and the nut means are e.g. formed in brass, the second material is significantly harder than the first material which is advantageous in that when the two parts are connected surface irregularities of the harder wedge means will engage the opposing surface of nut means to form a strong connection.

In an aspect of the invention, the first material is brass or bronze.

Due to the low-friction against materials such as steel and stainless steel - which the threaded shaft typically is made from - it is advantageous to form the nut means from brass or bronze.

In an aspect of the invention, the second material is iron or stainless steel.

The wedge means are relatively large - and thereby material consuming - and the shape of the wedge means is relatively complex. It is therefore advantageous to form the wedge means in cast iron - which is relatively inexpensive and simple to give a complex shape - or in stainless steel - which is durable, strong and can be milled.

In an aspect of the invention, a play between the nut means and the wedge means is between 0.1 and 5 mm, preferably between 0.3 and 3 mm and most preferred between 0.5 and 2 mm before the nut means and the wedge means are connected.

If the play between the nut means and the wedge means is too big before the two are connected, the risk of damaging one of the parts during the connection process is increased and the force needed to establish a solid connecting is too high. However, if the play between the nut means and the wedge means is too little it will become difficult to fit the nut means inside the nut cavity and the production costs are increased. The present play size ranges therefore presents an advantageous relationship between safety and cost.

In an aspect of the invention, the an overlap between the nut means and the wedge means is between 0.1 and 6 mm, preferably between 0.5 and 5 mm and most preferred between 1 and 4 mm after the nut means and the wedge means are connected.

If the overlap between the nut means and the wedge means is too big after the two have been connected, the risk of the connection process damaging one of the parts is increased. However, if the overlap between the nut means and the wedge means is too little the connection is not strong. The present overlap size ranges therefore presents an advantageous relationship between safety and strength.

In an aspect of the invention, the method further comprises the step of substantially enclosing the outer surfaces of the fluid control means in a waterproof coating after connecting the nut means and wedge means.

Enclosing the fluid control means in a waterproof coating is advantageous in that the fluid control means is hereby protected from the fluid flowing through the valve - thus, reducing risk of corrosion, erosion and other wear.

In an aspect of the invention, a module of elasticity of said first material is lower than a module of elasticity of said second material.

Forming the nut means in a material that has a lower module of elasticity than the wedge means is advantageous in that it hereby is ensured that the more flexible nut means will adapt better to surface irregularities of the wedge means.

In an aspect of the invention, the valve is a gate valve.

It is particularly advantageous to use fluid control means made according to the present invention in relation with gate valves.

In an aspect of the invention, the method further comprises adding an anti-friction lubricant between the mandrel means and an inner surface of the inner through hole before or during the expansion process.

If the mandrel seize during the expansion process the mandrel means and/or the nut means could be damaged and it is therefore advantageous to add an anti-friction lubricant before or during the expansion process.

The invention further provides for a valve comprising fluid control means manufactured by a method according to any of the previously described methods.

### Figures

An embodiment of the invention will be described, by way of non-limiting example, in the following with reference to the figures in which:
- fig. 1.: illustrates a gate valve, as seen in perspective,
- fig. 2: illustrates a partial cross section through the middle of a gate valve, as seen from the front,
- fig. 3: illustrates a partial cross section through the middle of a gate valve, as seen from the side,
- fig. 4: illustrates a full cross section through the middle of a gate valve, as seen from the side,
- fig. 5: illustrates a cross section through the middle of nut means and the top of wedge means before assembly, as seen from the front,
- fig. 6: illustrates a nut cavity of wedge means, as seen from the top,
- fig. 7: illustrates a cross section through the middle of nut means being arranged inside a nut cavity, as seen from the front,
- fig. 8: illustrates a cross section through the middle of mandrel means expanding nut means being arranged inside a nut cavity, as seen from the front,
- fig. 9: illustrates a close-up of a cross section through the middle of nut means and nut cavity after expansion, as seen from the front, and
- fig. 10: illustrates a close-up of nut means and wedge means after expansion, as seen from the top.

### Detailed description

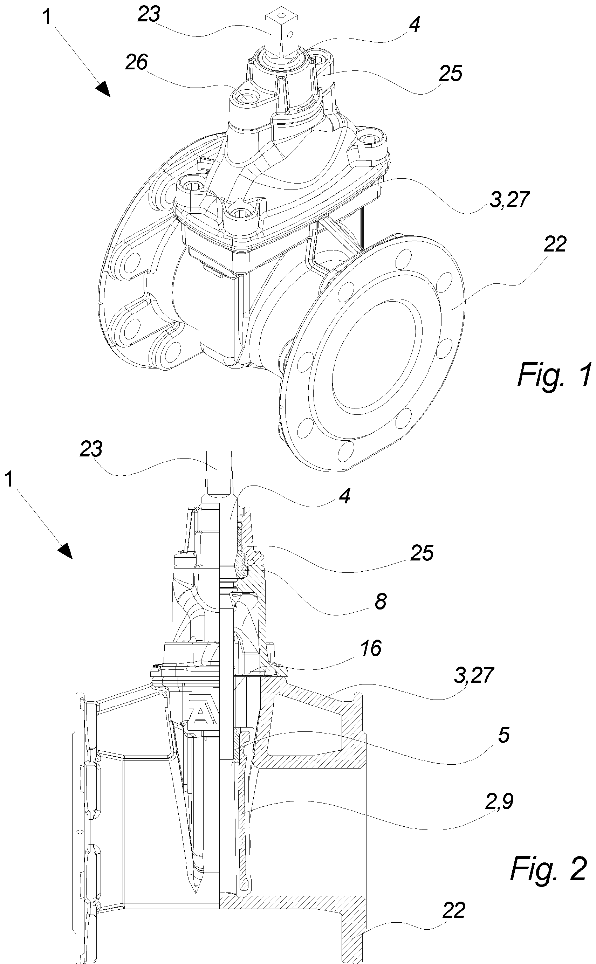

Fig. 1 illustrates a gate valve 1, as seen in perspective and fig. 2 illustrates a partial cross section through the middle of a gate valve 1, as seen from the front.

A gate valve 1, also known as a sluice valve, is a valve 1 that opens by lifting fluid control means 2 out of the path of a fluid passing through the valve housing 3 of the valve 1. A distinct feature of a gate valve 1 is the sealing surfaces between the wedge means 9 and guide means 24 (or wedge means seats) are substantially planar, so gate valves 1 are often used when a straight-line flow of fluid and minimum restriction is desired. The faces of the wedge means 9 of a gate valve 1 are often at least partly wedge shaped, but they can also be parallel.

In this embodiment the valve 1 comprises a valve housing 3 in which fluid control means 2 are arranged to allow or prevent flow of fluid through the valve housing 3. In this embodiment the valve housing comprises end flanges 22 enabling that the valve 1 may be connected to a pipe (not shown) at either end of the valve housing 3.

In this embodiment shaft means 4 - also known as a stem 4 - extends down through the top of the valve housing 3. In this embodiment the bottom part of the shaft means 4 is provided with external thread 16 meshing with internal thread 14 of nut means 5. The nut means 5 is rigidly connected to the wedge means 9 so that when the shaft means 4 is rotated, the nut means 5 and the wedge means 9 will travel up and down the shaft means 4 depending on the direction of the rotation i.e. the fluid control means 2 are arranged to be displaced along the rotational axis 7 of the shaft means 4 in accordance with rotation of the shaft means 4. When the wedge means 9 reaches an extreme position - either fully closed or fully open - the wedge means 9 will be physically blocked against further travel and to protect the shaft means 4, the fluid control means 2 or other parts of the valve 1 from damaging axial load - if the shaft means 4 is rotated further - the valve 1 is in this embodiment also provided with collar means 8 arranged to relieve such axial loads.

In this embodiment the upper end of the shaft means 4 extends out of the valve housing 3 and is provided with a connection arrangement 23 in the form of four flat surfaces providing the upper end of the shaft means 4 with a square shape. The connection arrangement 23 enables that the shaft means 4 may be manually rotated e.g. by means of a key, a wrench, a hand wheel or other or automatically operated by means of a motor, an actuator or other.

In another embodiment the valve 1 could be another type of valve 1 such as a knife valve 1 which essentially is the same as a gate valve 1 where the wedge means 9 is formed with a knife shape enabling that the wedge means 9 made cut through extremely thick liquids or semi-liquids. Or the valve 1 could be any another type of or gate-like valve 1.

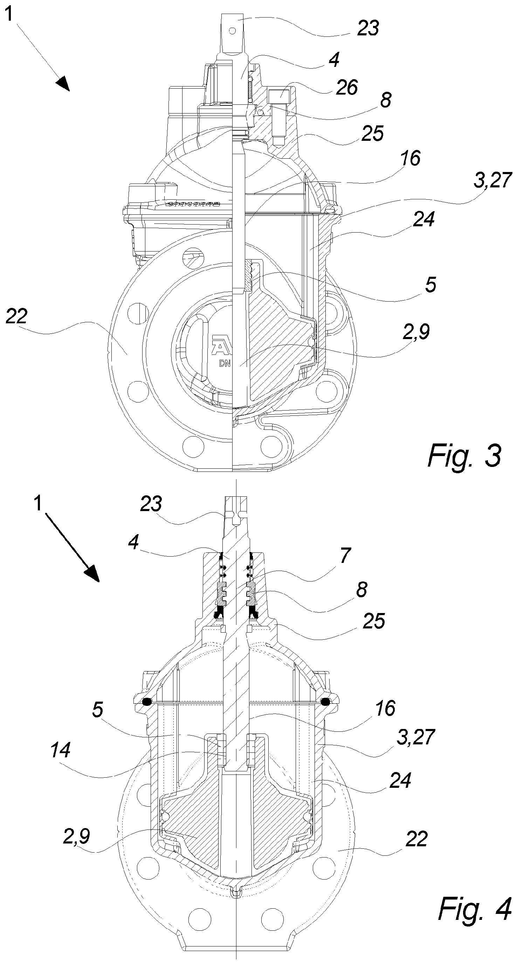

Fig. 3 illustrates a partial cross section through the middle of a gate valve 1, as seen from the side and fig. 4 illustrates a full cross section through the middle of a gate valve 1, as seen from the side.

To prevent the wedge means 9 from rotating along with the rotation of the shaft means 4, the wedge means 9 is in this embodiment arranged to be guided by guide means 24 extending along either side of the valve housing 3. Once the wedge means 9 is in its lowest extreme position the guide means 24 will also act as a seat for the wedge means 9 to form a tight seal.

In this embodiment the nut means 5 are made from brass but in another embodiment it could be made from titanium, bronze, aluminium or another metal or another material such as plastic, wood, ceramics or other or any combination thereof.

In this embodiment the wedge means 9 are made from cast iron but in another embodiment it could be made from steel, stainless steel, titanium, brass, aluminium or another metal or another material such as plastic, wood, ceramics or other or any combination thereof.

I.e. in this embodiment the nut means 5 are made from a brass - more specifically BS 2874 CZ 132 - having a Brinell hardness (HB 10) around 50 N/mm² and a module of elasticity around 90,000 N/mm² while the wedge means are formed in cast iron - more specifically GGG50 DIN1693 - having a Brinell hardness (HB 10) around 200 N/mm² and a module of elasticity around 170,000 N/mm², making the wedge means material significantly harder than the nut means material.

However, in another embodiment wedge means material could only be slightly harder than the nut means material or vice versa.

In this embodiment the shaft means 4 are made from stainless steel but in another embodiment it could be made from steel, cast iron, titanium, brass, aluminium or another metal or another material such as plastic, wood, ceramics or other or any combination thereof.

When the shaft means 4 are made from stainless steel it is advantageous if the nut means 5 are made from brass (or bronze or a similar bearing-suited material) in that the friction coefficient between the thread 16 of the shaft means 4 and the corresponding thread 14 of the nut means 5 will in this case be around 0.35. However, in another embodiment - particularly if one of both of the shaft means 4 and the nut means 5 are made from a different material - the friction coefficient could be bigger - such as 0.45, 0.6, 0.7 or even bigger - or smaller - such as 0.3, 0.25, 0.2 or even smaller.

In this embodiment the entire nut means 5 are made from the same material and the entire wedge means 9 are made same material. However, in another embodiment the nut means 5 and/or the wedge means 9 could be made from more than one material, wherein these materials have different properties i.e. in another embodiment the nut means 5 could be formed from two interconnected bushings wherein the inner bushing e.g. could be made from bronze and the outer bushing e.g. could be made from brass. Or in an embodiment the part of the wedge means 9 engaging the guide means 24 could be formed in brass while the rest of the wedge means 9 was formed in cast iron.

Also, in another embodiment at least one of the nut means 5 and/or the wedge means 9 could comprise some sort of surface treatment e.g. arranged to increase or decrease friction, to extend the life of the parts 5, 9, to prevent corrosion, to enable lubrication - e.g. self-lubrication or other. I.e. in another embodiment the nut means 5 and/or the wedge means 9 could comprise a coating of another metal type, of ceramic, of a composite material, of a plastic material or another type of surface treatment. Or in another embodiment the nut means 5 and/or the wedge means 9 could be tempered or at least comprise some sort of tempering treatment.

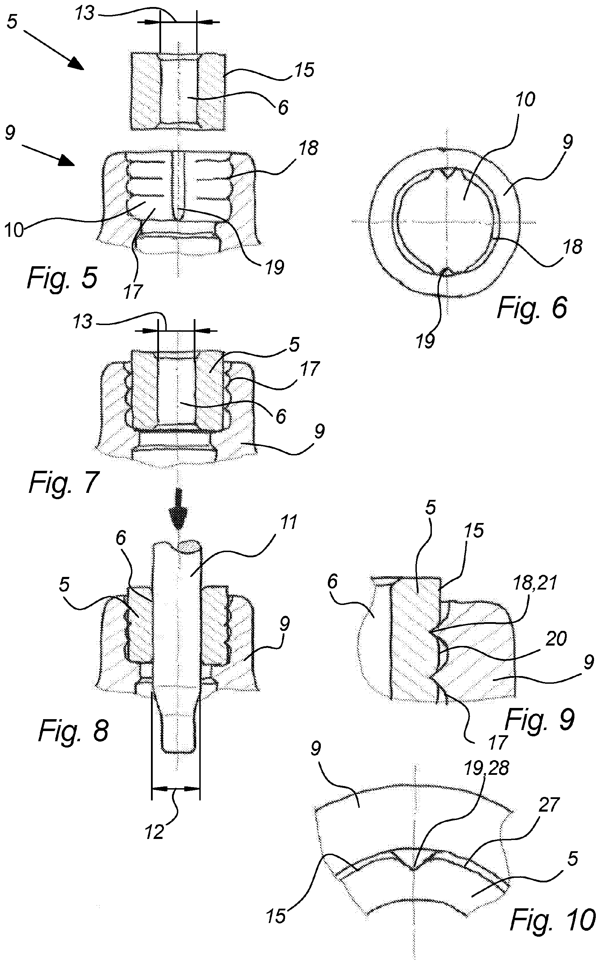

Fig. 5 illustrates a cross section through the middle of nut means 5 and the top of wedge means 9 before assembly, as seen from the front.

In this embodiment the nut means 5 are formed as a simple plain bushing so that the thread inside the nut 5 is not cut in the inner through hole 6 until after the nut 5 and the wedge 9 are rigidly connected. But in another embodiment the thread or parts of the thread could be pre-cut inside the nut 5 before assembly.

In this embodiment the nut means 5 have a substantially circular outer cross section making the nut means 5 substantially cylindrical so that the nut means 5 fit into the also circular nut cavity 10 of the wedge means 9. But in another embodiment the nut means 5 and/or the nut cavity 10 could be formed with a different cross section, such as square, oval, polygonal or other.

In this embodiment the outer diameter of the nut means 5 is around 39 mm, while the inner diameter 13 of the inner through hole 6 is around 19.8 mm and the maximum inner diameter of the nut cavity 10 is around 44.2 mm, while the minimum inner diameter of the nut cavity 10 is around 40.2 mm. Thus, in this embodiment the play between the nut means 5 and the nut cavity 10 is around 2.2 mm before the two are connected. However, in another embodiment the play before connection could be larger e.g. if the parts were larger or if larger production tolerances was desired or the play could be smaller e.g. if the parts were smaller or if smaller production tolerances was easily obtainable.

In this embodiment the outside sidewall 15 of the nut means 5 is substantially flat and plane while the inside sidewall 17 of the nut cavity 10 are provided with both transversal protrusions 18 and longitudinal protrusions 19. However in another embodiment the nut cavity 10 would only be provided with transversal protrusions 18 or longitudinal protrusions 19 or with protrusions 18, 19 formed differently - such as spikes, helical protrusions, rough surface parts or other.

In this embodiment the protrusions 18, 19 are substantially identical but in another embodiment the size and/or the shape of the protrusions 18, 19 could vary.

In the embodiments disclosed in figures 5-10 inner through hole 6 of the nut means 5, the outside sidewall 15 of the nut means 5, the inside sidewall 17 of the nut cavity 10 and the outer sidewall of the mandrel means 11 all have a circular cross section giving them a cylindrical shape. However, in another embodiment the nut 5 and the nut cavity 10 could e.g. be square to lock the nut 5 and the wedge 9 against mutual rotation. And although it is not optimal to cut thread in a square hole, in another embodiment the inner hole 6 in the nut 5 and the mandrel means 11 could also or instead be square. Or instead of square one or more of these parts or surfaces could instead be triangular, oval, polygonal or have another more or less complex shape.

Fig. 6 illustrates a nut cavity 10 of wedge means 9, as seen from the top.

In this embodiment the nut cavity 10 of wedge means 9 is provided with two longitudinal protrusions 19 symmetrically separated by transversal protrusions 18. However, in another embodiment the wedge means 9 could comprise another number of longitudinal protrusions 19 - such as one, three, four or more - and/or the longitudinal protrusions 19 could be asymmetrically arranged in the nut cavity 10.

Fig. 7 illustrates a cross section through the middle of nut means 5 being arranged inside a nut cavity 10, as seen from the front.

As explained above the play between the nut means 5 and the nut cavity 10 is in this embodiment around 2.2 mm before the two are connected. Thus, even is the production tolerances of the cast iron wedge means 9 is relatively high the relatively large play will ensure an easy and simple assembling.

Fig. 8 illustrates a cross section through the middle of mandrel means 11 expanding nut means 5 being arranged inside a nut cavity 10, as seen from the front.

In this embodiment the nut means 5 are expanded by driving mandrel means 11 comprising an increasing cross section through the inner through hole 6 of the nut means 5. The largest effective cross section of the mandrel means 11 is in this embodiment around 26 mm and since the inner through hole 6 of the nut means 5 in this embodiment was around 19.8 mm the nut means 5 are significantly expanded by the mandrel means 11.

In one embodiment the mandrel means 11 could be pushed all the way through the inner through hole 6 of the nut means 5 but in this embodiment the mandrel means 11 are retracted once maximum expansion has been reached.

Fig. 9 illustrates a close-up of a cross section through the middle of nut means 5 and nut cavity 10 after expansion, as seen from the front and fig. 10 illustrates a close-up of nut means 5 and wedge means 9 after expansion, as seen from the top.

Once the expansion process is completed the outside sidewall 15 of the nut means 5 will have expanded so that the outside sidewall 15 of the nut means 5 is forced into and past the protrusions 18, 19 of the inside sidewall 17 of the nut cavity 10 to form an overlap - which in this case is around 2.3 mm - thereby forming a strong and play-free hold between the nut means 5 and the wedge means 9.

In this embodiment the nut means 9 was pre-formed with longitudinal and transversal protrusions 20, 27 and tracks 21, 28 on the outer sidewall 15 corresponding to the transversal protrusions 18 and longitudinal protrusions 19 of the nut cavity 10, but in a preferred embodiment only the nut cavity 10 would be provided with transversal and longitudinal protrusions 18, 19.

The invention has been exemplified above with reference to specific examples of valves 1, fluid control means 2, shaft means 4 and other. However, it should be understood that the invention is not limited to the particular examples described above but may be designed and altered in a multitude of varieties within the scope of the invention as specified in the claims.

### List

- 1.: Valve
- 2.: Fluid control means
- 3.: Valve housing
- 4.: Shaft means
- 5.: Nut means
- 6.: Inner through hole of nut means
- 7.: Rotational axis of shaft means
- 8.: Collar means
- 9.: Wedge means
- 10.: Nut cavity
- 11.: Mandrel means
- 12.: Outer mandrel diameter
- 13.: Inner hole diameter
- 14.: Internal thread in said inner through hole
- 15.: Outer sidewall of nut means
- 16.: Threaded part of shaft means
- 17.: Inner sidewall of wedge means
- 18.: Transversal protrusion on inner sidewall of wedge means
- 19.: Longitudinal protrusion on inner sidewall of wedge means
- 20.: Transversal protrusion on outer sidewall of nut means
- 21.: Transversal track on outer sidewall of nut means
- 22.: End flange
- 23.: Connection arrangement of shaft means
- 24.: Guide means
- 25.: Top part of valve housing
- 26.: Bolt
- 27.: Longitudinal protrusion on outer sidewall of nut means
- 28.: Longitudinal track on outer sidewall of nut means

## Claims

1. A method for manufacturing fluid control means (2) for controlling a fluid flow through a valve (1), said method comprising the steps of
• forming nut means (5) with an inner through hole (6), wherein said nut means (5) are primarily made from a first material,
• forming wedge means (9) with a nut cavity (10), wherein said wedge means (9) are primarily made from a second material and wherein said first material is harder than said second material or said second material is harder than said first material,
• arranging said nut means (5) inside said nut cavity (10), and
• connecting said nut means (5) and wedge means (9) by expanding said nut means (5) by means of mandrel means (11) to make said nut means (5) and said wedge means (9) engage each other.

2. A method according to claim 1, wherein said mandrel means (11) are forced through said inner through hole (6).

3. A method according to claim 1 or 2, wherein a cross section of said mandrel means (11) is bigger than a cross section of said inner through hole (6).

4. A method according to claim 1 or 2, wherein an outer mandrel diameter (12) of said mandrel means (11) is greater than an inner hole diameter (13) of said inner through hole (6).

5. A method according to any of the preceding claims, wherein said method further comprises the step of cutting internal thread (14) in said inner through hole (6) after connecting said nut means (5) and wedge means (9).

6. A method according to any of the preceding claims, wherein said nut means (5) and said wedge means (9) are connecting by forcing at least one outer sidewall (15) of said nut means (5) against at least one inner sidewall (17) of said wedge means (9) or vice versa.

7. A method according to any of the preceding claims, wherein said method further comprises the step of arranging one or more protrusions (18, 19) on an inner sidewall (17) of said nut cavity (10) before said nut means (5) and said wedge means (9) are connected.

8. A method according to claim 7, wherein at least one of said one or more protrusions (18, 19) are formed as a transversal protrusion (18) arranged to extend transversely on said inner sidewall (17) in relation to a longitudinal extend of said nut cavity (10).

9. A method according to claim 7 or 8 wherein at least one of said one or more protrusions (18, 19) are formed as a longitudinal protrusion (19) arranged to extend longitudinally on said inner sidewalls (17) in relation to a longitudinal extend of said nut cavity (10).

10. A method according to any of the preceding claims, wherein said method further comprises the step of arranging one or more protrusions (20, 27) and/or tracks (21, 28) on an outer sidewall (15) of said nut means (5) before said nut means (5) and said wedge means (9) are connected.

11. A method according to claim 10, wherein at least one of said one or more protrusions (20, 27) and/or tracks (21, 28) are formed as a transversal protrusion (20) and/or track (21) arranged to extend transversely on said outer sidewall (15) in relation to a longitudinal extend of said nut means (5).

12. A method according to claim 10 or 11, wherein at least one of said one or more protrusions (20, 27) and/or tracks (21, 28) are formed as a longitudinal protrusion (27) and/or track (28) arranged to extend longitudinally on said outer sidewall (15) in relation to a longitudinal extend of said nut means (5).

13. A method according to any of the preceding claims, wherein said second material is significantly harder than said first material.

14. A method according to any of the preceding claims, wherein said valve is a gate valve.

15. A valve (1) comprising fluid control means (2) manufactured by a method according to any of the preceding claims.

## Patentansprüche

1. Verfahren zur Herstellung von Fluidsteuerungsmitteln (2) zum Steuern eines Fluidstroms durch ein Ventil (1), wobei das Verfahren die folgenden Schritte umfasst:
• Formen von Muttermitteln (5) mit einem Durchgangsinnenloch (6), wobei die Muttermittel (5) primär aus einem ersten Material bestehen,
• Formen von Keilmitteln (9) mit einem Mutterhohlraum (10), wobei die Keilmittel (9) primär aus einem zweiten Material bestehen und wobei das erste Material härter als das zweite Material oder das zweite Material härter als das erste Material ist,
• Anordnen der Muttermittel (5) im Mutterhohlraum (10), und
• Verbinden der Muttermittel (5) und der Keilmittel (9) durch Expandieren der Muttermittel (5) mithilfe von Dornmitteln (11), um zu bewirken, dass die Muttermittel (5) und die Keilmittel (9) einander in Eingriff nehmen.

2. Verfahren nach Anspruch 1, wobei die Dornmittel (11) durch das Durchgangsinnenloch (6) gedrückt werden.

3. Verfahren nach Anspruch 1 oder 2, wobei ein Querschnitt der Dornmittel (11) größer als ein Querschnitt des Durchgangsinnenlochs (6) ist.

4. Verfahren nach Anspruch 1 oder 2, wobei ein Dornaußendurchmesser (12) der Dornmittel (11) größer als ein Innenlochdurchmesser (13) des Durchgangsinnenlochs (6) ist.

5. Verfahren nach einem der vorangehenden Ansprüche, wobei das Verfahren ferner den Schritt des Schneidens eines Innengewindes (14) in das Durchgangsinnenloch (6) nach dem Verbinden der Muttermittel (5) und der Keilmittel (9) umfasst.

6. Verfahren nach einem der vorangehenden Ansprüche, wobei sich die Muttermittel (5) und die Keilmittel (9) verbinden, indem mindestens eine Außenseitenwand (15) der Muttermittel (5) gegen mindestens eine Innenseitenwand (17) der Keilmittel (9) oder umgekehrt gedrückt wird.

7. Verfahren nach einem der vorangehenden Ansprüche, wobei das Verfahren ferner den Schritt des Anordnens eines oder mehrerer Vorsprünge (18, 19) an einer Innenseitenwand (17) des Mutterhohlraums (10) vor dem Verbinden der Muttermittel (5) und der Keilmittel (9) umfasst.

8. Verfahren nach Anspruch 7, wobei mindestens einer des einen oder der mehreren Vorsprünge (18, 19) als ein Quervorsprung (18) geformt ist, der angeordnet ist, um sich an der Innenseitenwand (17) in Bezug auf eine Längsausdehnung des Mutterhohlraums (10) in Querrichtung zu erstrecken.

9. Verfahren nach Anspruch 7 oder 8, wobei mindestens einer des einen oder der mehreren Vorsprünge (18, 19) als ein Längsvorsprung (19) geformt ist, der angeordnet ist, um sich an den Innenseitenwänden (17) in Bezug auf eine Längsausdehnung des Mutterhohlraums (10) in Längsrichtung zu erstrecken.

10. Verfahren nach einem der vorangehenden Ansprüche, wobei das Verfahren ferner den Schritt des Anordnens eines oder mehrerer Vorsprünge (20, 27) und/oder Bahnen (21, 28) an einer Außenseitenwand (15) der Muttermittel (5) vor dem Verbinden der Muttermittel (5) und der Keilmittel (9) umfasst.

11. Verfahren nach Anspruch 10, wobei mindestens einer des einen oder der mehreren Vorsprünge (20, 27) und/oder Bahnen (21, 28) als Quervorsprung (20) und/oder Bahn (21) geformt ist, der bzw. die angeordnet ist, um sich an der Außenseitenwand (15) in Bezug auf eine Längsausdehnung der Muttermittel (5) in Querrichtung zu erstrecken.

12. Verfahren nach Anspruch 10 oder 11, wobei mindestens einer des einen oder der mehreren Vorsprünge (20, 27) und/oder Bahnen (21, 28) als Längsvorsprung (27) und/oder Bahn (28) geformt ist, der bzw. die angeordnet ist, um sich an der Außenseitenwand (15) in Bezug auf eine Längsausdehnung der Muttermittel (5) in Längsrichtung zu erstrecken.

13. Verfahren nach einem der vorangehenden Ansprüche, wobei das zweite Material signifikant härter als das erste Material ist.

14. Verfahren nach einem der vorangehenden Ansprüche, wobei das Ventil ein Schieberventil ist.

15. Ventil (1), umfassend ein Fluidsteuerungsmittel (2), das durch ein Verfahren nach einem der vorangehenden Ansprüche hergestellt wird.

## Revendications

1. Méthode de fabrication d'un régulateur de fluide (2) pour assurer la régulation d'un débit de fluide à travers une vanne (1), ladite méthode comprenant les étapes
• de formation de dispositifs d'écrou (5) dotés d'un trou traversant interne (6), lesdits dispositifs d'écrou (5) étant réalisés principalement avec un premier matériau,
• de formation de dispositifs de coin (9) avec une cavité d'écrou (10), lesdits dispositifs de coin (9) étant réalisés principalement avec un deuxième matériau, ledit premier matériau étant plus dur que ledit deuxième matériau ou ledit deuxième matériau étant plus dur que ledit premier matériau,
• d'agencement desdits dispositifs d'écrou (5) à l'intérieur de ladite cavité d'écrou (10), et
• de raccordement desdits dispositifs d'écrou (5) et desdits dispositifs de coin (9) par l'expansion desdits dispositifs d'écrou (5) à l'aide d'un dispositif à mandrin (11) afin d'effectuer l'engagement desdits dispositifs d'écrou (5) avec lesdits dispositifs de coin (9).

2. Méthode selon la revendication 1, ledit dispositif à mandrin (11) étant forcé à travers ledit trou traversant interne (6).

3. Méthode selon la revendication 1 ou 2, une section transversale dudit dispositif à mandrin (11) étant plus grande qu'une section transversale dudit trou traversant interne (6).

4. Méthode selon la revendication 1 ou 2, un diamètre extérieur du mandarin (12) dudit dispositif à mandrin (11) étant plus grand qu'un diamètre du trou intérieur (13) dudit trou traversant interne (6).

5. Méthode selon une quelconque des revendications précédentes, ladite méthode comprenant en outre l'étape de réalisation d'un filetage interne (14) dans ledit trou traversant interne (6) après le raccordement desdits dispositifs d'écrou (5) et desdits dispositifs de coin (9).

6. Méthode selon une quelconque des revendications précédentes, le raccordement desdits dispositifs d'écrou (5) et desdits dispositifs de coin (9) s'effectuant en forçant au moins une paroi latérale extérieure (15) desdits dispositifs d'écrou (5) contre au moins une paroi latérale interne (17) desdits dispositifs de coin (9), ou vice-versa.

7. Méthode selon une quelconque des revendications précédentes, ladite méthode comprenant en outre l'étape d'agencement d'une ou plusieurs saillies (18, 19) sur une paroi latérale interne (17) de ladite cavité d'écrou (10) avant le raccordement desdits dispositifs d'écrou (5) et desdits dispositifs de coin (9).

8. Méthode selon la revendication 7, au moins une desdites une ou plusieurs saillies (18, 19) étant réalisée comme une saillie transversale (18) agencée pour s'étendre transversalement sur ladite paroi latérale interne (17) relativement à une extension longitudinale de ladite cavité d'écrou (10).

9. Méthode selon la revendication 7 ou 8, au moins une desdites une ou plusieurs saillies (18, 19) étant réalisée comme une saillie longitudinale (19) agencée pour s'étendre longitudinalement sur lesdites parois latérales internes (17) relativement à une extension longitudinale de ladite cavité d'écrou (10).

10. Méthode selon une quelconque des revendications précédentes, ladite méthode comprenant en outre l'étape d'agencement d'une ou plusieurs saillies (20, 27) et/ou pistes (21, 28) sur une paroi latérale extérieure (15) desdits dispositifs d'écrou (5), avant le raccordement desdits dispositifs d'écrou (5) et desdits dispositifs de coin (9).

11. Méthode selon la revendication 10, au moins une desdites une ou plusieurs saillies (20, 27) et/ou pistes (21, 28) étant formées comme une saillie transversale (20) et/ou piste (21) agencée pour s'étendre transversalement sur ladite paroi latérale extérieure (15) relativement à une extension longitudinale desdits dispositifs d'écrou (5).

12. Méthode selon la revendication 10 ou 11, au moins une ou plusieurs saillies (20, 27) et/ou pistes (21, 28) étant formées comme une saillie (27) et/ou piste (28) longitudinale agencée pour s'étendre longitudinalement sur ladite paroi latérale extérieure (15) relativement à une extension longitudinale desdits dispositifs d'écrou (5).

13. Méthode selon une quelconque des revendications précédentes, ledit deuxième matériau étant sensiblement plus dur que ledit premier matériau.

14. Méthode selon une quelconque des revendications précédentes, ladite vanne étant une vanne à tiroir.

15. Vanne (1) comprenant un régulateur de fluide (2) fabriqué à l'aide d'une méthode selon une quelconque des revendications précédentes.
